# EUROPEAN PATENT APPLICATION

(11) **EP 4 400 545 A1**
(43) Date of publication of application: **17.07.2024**
(21) Application number: 22867281.2
(22) Date of filing: 01.09.2022
(51) Int. Cl.: C08L 67/02, C08G 59/04, C08L 69/00, C08L 79/00

(54) **CONDUIT TUBE AND THERMOPLASTIC POLYESTER ELASTOMER RESIN COMPOSITION**

(30) Priority: 07.09.2021 JP 2021145243
(71) Applicant: TOYOBO MC Corporation, Osaka 530-0001 (JP)
(72) Inventor: HARADA, Shinji, Otsu-shi, Shiga 520-0292 (JP); AKAISHI, Takuya, Otsu-shi, Shiga 520-0292 (JP)
(74) Representative: Vossius & Partner Patentanwälte Rechtsanwälte mbB
(86) International application number: PCT/JP2022/032973
(87) International publication number: WO 2023/037959

(57) **Abstract**

A conduit tube includes a thermoplastic polyester elastomer resin composition containing a thermoplastic polyester elastomer A and a polycarbodiimide compound B, wherein the thermoplastic polyester elastomer A is formed by bonding 20 mass% or more and 65 mass% or less of a hard segment and 35 mass% or more and 80 mass% or less of a soft segment, the hard segment is composed of a polyester constituted from an aromatic dicarboxylic acid and an aliphatic or alicyclic diol as constituting components, the soft segment contains an aliphatic polycarbonate, and the thermoplastic polyester elastomer resin composition contains 0.1 parts by mass or more and 5 parts by mass or less of the polycarbodiimide compound B based on 100 parts by mass of the thermoplastic polyester elastomer A.

## Description

### TECHNICAL FIELD

The present invention relates to a conduit tube and a thermoplastic polyester elastomer resin composition.

### BACKGROUND ART

Japanese Patent Laying-Open No. H10-017657 (PTL 1), Japanese Patent Laying-Open No. 2003-192778 (PTL 2), and the like disclose thermoplastic polyester elastomers formed by bonding: a crystalline polyester such as polybutylene terephthalate (PBT) and polybutylene naphthalate (PBN) as a hard segment; and polyoxyalkylene glycols such as polytetramethylene glycol (PTMG) and/or a polyester such as polycaprolactone (PCL) and polybutylene adipate (PBA) as a soft segment. The thermoplastic polyester elastomers have been practically used.

However, the polyester-polyether elastomer that uses the polyoxyalkylene glycols for the soft segment is known to have excellent water resistance and low-temperature characteristics but poor heat-aging resistance. It is also known that the polyester-polyester elastomer that uses the polyester for the soft segment has excellent heat-aging resistance but poor water resistance and low-temperature characteristics.

For a purpose of solving these disadvantages, polyester-polycarbonate elastomers that use a polycarbonate for the soft segment have been proposed in Japanese Patent Publication No. H07-039480 (PTL 3), Japanese Patent Laying-Open No. H05-295049 (PTL 4), Japanese Patent Laying-Open No. H06-306202 (PTL 5), Japanese Patent Laying-Open No. H10-182782 (PTL 6), Japanese Patent Laying-Open No. 2001-206939 (PTL 7), Japanese Patent Laying-Open No. 2001-240663 (PTL 8) and the like. The polyester-polycarbonate elastomer utilizes its excellent features to be used for usage that requires high heat resistance and heat-aging resistance, such as peripheral members of an engine in an automobile.

### CITATION LIST

### PATENT LITERATURE

PTL 1: Japanese Patent Laying-Open No. H10-017657
PTL 2: Japanese Patent Laying-Open No. 2003-192778
PTL 3: Japanese Patent Publication No. H07-039480
PTL 4: Japanese Patent Laying-Open No. H05-295049
PTL 5: Japanese Patent Laying-Open No. H06-306202
PTL 6: Japanese Patent Laying-Open No. H10-182782
PTL 7: Japanese Patent Laying-Open No. 2001-206939
PTL 8: Japanese Patent Laying-Open No. 2001-240663

### SUMMARY OF INVENTION

### TECHNICAL PROBLEM

In recent years, the peripheral members (specifically, a conduit tube) of the engine in the automobile have been required to further improve heat resistance, heat-aging resistance, and water resistance (hereinafter, also referred to as "water-aging resistance"), and moldability and flexibility for usability in a complex shape as a result of mounting of a turbo engine, change in arrangement of members in the automobile and the like. Thus, development of a conduit tube that contains a thermoplastic polyester elastomer resin composition that satisfies the above requirements has been desired.

In view of the above points, an object of the present invention is to provide: a conduit tube that contains a thermoplastic polyester elastomer resin composition that has excellent heat resistance, heat-aging resistance, and water resistance, and also has excellent moldability and flexibility; and the thermoplastic polyester elastomer resin composition.

### SOLUTION TO PROBLEM

The present inventors have made intensive investigation to provide a conduit tube that contains a thermoplastic polyester elastomer resin composition that can solve all the above problems. As a result, it has been found that a thermoplastic polyester elastomer resin composition in which a predetermined amount of a polycarbodiimide compound is blended with a predetermined thermoplastic polyester elastomer improves the aforementioned characteristics, leading to completion of the present invention.

Specifically, the present invention provides: a conduit tube that contains the following thermoplastic polyester elastomer resin composition; and the thermoplastic polyester elastomer resin composition.
[1] A conduit tube, comprising a thermoplastic polyester elastomer resin composition comprising a thermoplastic polyester elastomer A and a polycarbodiimide compound B, wherein
   the thermoplastic polyester elastomer A is formed by bonding 20 mass% or more and 65 mass% or less of a hard segment and 35 mass% or more and 80 mass% or less of a soft segment,
   the hard segment is composed of a polyester constituted from an aromatic dicarboxylic acid and an aliphatic or alicyclic diol as constituting components,
   the soft segment contains an aliphatic polycarbonate, and
   the thermoplastic polyester elastomer resin composition contains 0.1 parts by mass or more and 5 parts by mass or less of the polycarbodiimide compound B based on 100 parts by mass of the thermoplastic polyester elastomer A.
[2] The conduit tube according to [1], wherein the thermoplastic polyester elastomer resin composition contains a moiety bonded with a urethane group.
[3] The conduit tube according to [1] or [2], wherein the hard segment and the soft segment account for total 100 mass% of the thermoplastic polyester elastomer A.
[4] The conduit tube according to any one of [1] to [3], wherein the soft segment has a number average molecular weight of 5000 or more and 80000 or less.
[5] The conduit tube according to any one of [1] to [4], wherein a hardness of the thermoplastic polyester elastomer resin composition measured in accordance with a test method for a hardness of thermoplastics prescribed in ASTM D 2240 is D20 or more and D59 or less.
[6] The conduit tube according to any one of [1] to [5], wherein
   the thermoplastic polyester elastomer A has a melting point of 150°C or more and 225°C or less, and
   in an operation of repeating three times a cycle of raising a temperature from room temperature to 300°C at a temperature-raising rate of 20°C/min by using a differential scanning calorimeter, holding the temperature at 300°C for 3 minutes, and then lowering the temperature to room temperature at a temperature-lowering rate of 100°C/min, a difference in melting point (Tm1-Tm3) between a melting point (Tm1) of the thermoplastic polyester elastomer A measured at the time of the first temperature lowering and a melting point (Tm3) of the thermoplastic polyester elastomer A measured at the time of the third temperature lowering in the operation is 0°C or more and 50°C or less.
[7] The conduit tube according to any one of [1] to [6], wherein a molded product obtained from the thermoplastic polyester elastomer resin composition has a tensile breakage elongation retention after a thermal treatment at 150°C for 1000 hours in a tensile test performed in accordance with JIS K6251:2010 of 80% or more, and a tensile breakage elongation retention after a thermal treatment at 170°C for 1000 hours in the tensile test of 50% or more.
[8] The conduit tube according to any one of [1] to [7], wherein a molded product obtained from the thermoplastic polyester elastomer resin composition has a tensile breakage elongation retention after a boiling-water treatment at 100°C for 1000 hours in a tensile test performed in accordance with JIS K6251:2010 of 80% or more.
[9] The conduit tube according to any one of [1] to [8], wherein the thermoplastic polyester elastomer resin composition comprises 0 parts by mass or more and 0.5 parts by mass or less of a reactive compound C having two or more glycidyl groups based on 100 parts by mass of the thermoplastic polyester elastomer A.
[10] A thermoplastic polyester elastomer resin composition, comprising:
   a thermoplastic polyester elastomer A; and
   a polycarbodiimide compound B, wherein
   the thermoplastic polyester elastomer A is formed by bonding 20 mass% or more and 65 mass% or less of a hard segment and 35 mass% or more and 80 mass% or less of a soft segment,
   the hard segment is composed of a polyester constituted from an aromatic dicarboxylic acid and an aliphatic or alicyclic diol as constituting components,
   the soft segment contains an aliphatic polycarbonate, and
   the thermoplastic polyester elastomer resin composition contains more than 2 parts by mass and 5 parts by mass or less of the polycarbodiimide compound B based on 100 parts by mass of the thermoplastic polyester elastomer A.

### ADVANTAGEOUS EFFECTS OF INVENTION

The present invention can provide: a conduit tube that contains the thermoplastic polyester elastomer resin composition that has excellent heat resistance, heat-aging resistance, and water resistance, and also has excellent moldability and flexibility; and the thermoplastic polyester elastomer resin composition.

### DESCRIPTION OF EMBODIMENTS

Hereinafter, a conduit tube, a thermoplastic polyester elastomer resin composition, and a molded product that contains the same according to embodiments (hereinafter, also referred to as "the present embodiment") of the present invention will be described in more detail. A description in the form of "A to B" herein means upper and lower limits of a range (that is, A or more and B or less). When A has no description of a unit and only B has a description of a unit, the unit of A and the unit of B are same. The term "conduit tube" herein refers to a tube that is a channel to transfer a substance, specifically at least any one of liquid or gas, from one place to another place. An example of the conduit tube is a duct.

### [Conduit Tube]

The conduit tube according to the present embodiment is a conduit tube comprising a thermoplastic polyester elastomer resin composition comprising a thermoplastic polyester elastomer A and a polycarbodiimide compound B. The thermoplastic polyester elastomer A is formed by bonding 20 mass% or more and 65 mass% or less of a hard segment and 35 mass% or more and 80 mass% or less of a soft segment. The hard segment is composed of a polyester constituted from an aromatic dicarboxylic acid and an aliphatic or alicyclic diol as constituting components. The soft segment contains an aliphatic polycarbonate. The thermoplastic polyester elastomer resin composition contains 0.1 parts by mass or more and 5 parts by mass or less of the polycarbodiimide compound B based on 100 parts by mass of the thermoplastic polyester elastomer A. The conduit tube that has such features can exhibit excellent conduit tube performance based on properties of the thermoplastic polyester elastomer resin composition described below. Here, the term "conduit tube performance" means properties advantageous in manufacturing and using the conduit tube, such as heat resistance, heat-aging resistance, water resistance, moldability, and flexibility. The conduit tube is useful for usage that requires heat-aging resistance, water resistance, moldability, flexibility, and the like, such as, for example, automobiles and electric appliance components, and specifically usable as an air duct, a resonator, a joint boot, and the like.

### [Thermoplastic Polyester Elastomer Resin Composition]

The conduit tube according to the present embodiment comprises the thermoplastic polyester elastomer resin composition as noted above. The thermoplastic polyester elastomer resin composition contains a thermoplastic polyester elastomer A and a polycarbodiimide compound B. The thermoplastic polyester elastomer A is formed by bonding 20 mass% or more and 65 mass% or less of a hard segment and 35 mass% or more and 80 mass% or less of a soft segment. The hard segment is composed of a polyester constituted from an aromatic dicarboxylic acid and an aliphatic or alicyclic diol as constituting components. The soft segment contains an aliphatic polycarbonate. The thermoplastic polyester elastomer resin composition contains 0.1 parts by mass or more and 5 parts by mass or less of the polycarbodiimide compound B based on 100 parts by mass of the thermoplastic polyester elastomer A. The thermoplastic polyester elastomer resin composition contained in the conduit tube has excellent heat resistance, heat-aging resistance, water resistance and the like, and can also have excellent moldability and flexibility.

Furthermore, the thermoplastic polyester elastomer resin composition may specifically contain more than 2 parts by mass and 5 parts by mass or less of the polycarbodiimide compound B based on 100 parts by mass of the thermoplastic polyester elastomer A. That is, the thermoplastic polyester elastomer resin composition according to the present embodiment contains the thermoplastic polyester elastomer A and the polycarbodiimide compound B, the thermoplastic polyester elastomer A is formed by bonding 20 mass% or more and 65 mass% or less of a hard segment and 35 mass% or more and 80 mass% or less of a soft segment, the hard segment is composed of a polyester constituted from an aromatic dicarboxylic acid and an aliphatic or alicyclic diol as constituting components, the soft segment contains an aliphatic polycarbonate, and the thermoplastic polyester elastomer resin composition may contain more than 2 parts by mass and 5 parts by mass or less of the polycarbodiimide compound B based on 100 parts by mass of the thermoplastic polyester elastomer A.

Such a thermoplastic polyester elastomer resin composition can be suitably used as various molded materials represented by fibers, films, and sheets. Specifically, the thermoplastic polyester elastomer resin composition can be used as molded materials such as elastic yarn, a boot, a gear, a tube, and a packing. The thermoplastic polyester elastomer resin composition is useful for usage that requires heat-aging resistance, water resistance, moldability, flexibility, and the like, such as, for example, automobiles and electric appliance components, for example, usable as the aforementioned air duct, resonator, joint boot, covering material for an electric wire, and the like. Specifically, the thermoplastic polyester elastomer resin composition may be for a conduit tube (duct), or may be for blow-molding.

The "thermoplastic polyester elastomer resin composition" herein may comprise a reactive compound C in addition to the thermoplastic polyester elastomer A and the polycarbodiimide compound B. Furthermore, the thermoplastic polyester elastomer resin composition may contain a small amount of a polycarboxylic acid, a polyol, and the like as described later, and may contain an oxidation inhibitor, a light stabilizer, a lubricant, a filler, and other additives. All the aforementioned thermoplastic polyester elastomer resin compositions will be described with the same term "thermoplastic polyester elastomer resin composition" herein.

The thermoplastic polyester elastomer resin composition preferably has the following properties to have excellent hardness. That is, a hardness of the thermoplastic polyester elastomer resin composition measured in accordance with a test method for a hardness of thermoplastics prescribed in ASTM D 2240 is preferably D20 or more and D59 or less. In the present embodiment, the hardness of the thermoplastic polyester elastomer resin composition can be determined in accordance with the test method for a hardness of thermoplastics prescribed in ASTM D 2240 as follows.

First, the thermoplastic polyester elastomer resin composition is injected from an injection molding apparatus at a cylinder temperature of +20°C of a melting point of the resin composition and at a mold temperature of 50°C to obtain an injection-molded product with 100 mm in length × 100 mm in width × 2.0 mm in thickness. Then, onto three of the injection-molded products stacked in the thickness direction, a predetermined needle tip is dropped under an environment at 23°C to read an instant value of Shore D at this time. The hardness of the thermoplastic polyester elastomer resin composition can be determined by this instant value of Shore D. The hardness means a so-called surface hardness.

In this case, the hardness of the thermoplastic polyester elastomer resin composition is preferably D20 or more and D59 or less. The hardness of the thermoplastic polyester elastomer resin composition is more preferably D35 to D55. When the hardness is D20 or more and D59 or less, the thermoplastic polyester elastomer resin composition can be suitable for the aforementioned usage such as a joint boot of an automobile. If the hardness is more than D59, flexibility of the thermoplastic polyester elastomer resin composition may be insufficient. If the hardness is less than D20, the thermoplastic polyester elastomer resin composition becomes excessively soft, and thereby the strength of the molded product may fail to be achieved.

The thermoplastic polyester elastomer resin composition preferably has the following properties to have excellent heat-aging resistance. That is, a molded product obtained from the thermoplastic polyester elastomer resin composition preferably has a tensile breakage elongation retention after a thermal treatment at 150°C for 1000 hours in a tensile test performed in accordance with JIS K6251:2010 of 80% or more, and preferably has a tensile breakage elongation retention after a thermal treatment at 170°C for 1000 hours in the tensile test of 50% or more. The tensile breakage elongation retention of the molded product after the thermal treatment at 150°C for 1000 hours in the tensile test is more preferably 90% or more, and the tensile breakage elongation retention of the molded product after the thermal treatment at 170°C for 1000 hours in the tensile test is more preferably 60% or more.

The thermoplastic polyester elastomer resin composition preferably has the following properties to have excellent water resistance. That is, a molded product obtained from the thermoplastic polyester elastomer resin composition preferably has a tensile breakage elongation retention after a boiling-water treatment at 100°C for 1000 hours in a tensile test performed in accordance with JIS K6251:2010 of 80% or more. The tensile breakage elongation retention of the molded product after the boiling-water treatment at 100°C for 1000 hours in the tensile test is more preferably 90% or more.

The "molded product" to be a target of the tensile test herein means the following molded product. That is, the thermoplastic polyester elastomer resin composition is firstly injected from an injection molding apparatus at a cylinder temperature of +20°C of a melting point of the resin composition and at a mold temperature of 30°C to perform injection molding into a flat plate with 100 mm in length × 100 mm in width × 2 mm in thickness. Then, this flat plate is punched into a JIS-3 dumbbell shape in a right-angle direction relative to a flowing direction of the resin to produce a specimen, and this specimen is used as "molded product" of the target of the tensile test. The aforementioned thermal treatment at 150°C for 1000 hours and thermal treatment at 170°C for 1000 hours can be both performed by using a gear-type hot-air dryer. The aforementioned boiling-water treatment at 100°C for 1000 hours can be performed by using a container for water resistance test.

If the tensile breakage elongation retention after the thermal treatment at 150°C for 1000 hours in the tensile test of the molded product is less than 80%, the molded product tends to have low heat resistance to cause concern about deterioration due to use at 150°C in a long term. If the tensile breakage elongation retention after the thermal treatment at 170°C for 1000 hours in the tensile test of the molded product is less than 50%, the molded product has low heat resistance, and it may be difficult to apply the molded product under an environment at more than 170°C. The term "tensile breakage elongation retention" after the thermal treatment means a retention relative to the initial tensile breakage elongation after the thermal treatment.

If the tensile breakage elongation retention after the boiling-water treatment at 100°C for 1000 hours in the tensile test of the molded product is less than 80%, the molded product has low water resistance, and may cause concern about hydrolysis due to use in a long term under an environment in the present of water. The term "tensile breakage elongation retention" after the boiling-water treatment means a retention relative to the initial tensile breakage elongation after the boiling-water treatment.

### <Thermoplastic Polyester Elastomer A>

The conduit tube and thermoplastic polyester elastomer resin composition according to the present embodiment comprise the thermoplastic polyester elastomer A and the polycarbodiimide compound B, as noted above. The thermoplastic polyester elastomer A is formed by bonding 20 mass% or more and 65 mass% or less of a hard segment and 35 mass% or more and 80 mass% or less of a soft segment.

If the content of the soft segment in the thermoplastic polyester elastomer A is more than 80 mass%, crystallinity is decreased to lower the melting point and deteriorate the heat-aging resistance. If the content of the soft segment in the thermoplastic polyester elastomer A is less than 35 mass%, flexibility is deteriorated and crystallinity becomes excessively high, and thereby crystallization may proceed during the test for heat-aging resistance to decrease the tensile breakage elongation retention. In addition, if the content of the soft segment in the thermoplastic polyester elastomer A is less than 35 mass%, a relatively increased content of the hard segment may promote hydrolysis. That is, the thermoplastic polyester elastomer A can have excellent heat resistance, heat-aging resistance, water resistance, low-temperature characteristics, and the like, and excellent flexibility by the content of the hard segment that is 20 to 65 mass% and the content of the soft segment that is 35 to 80 mass%. The hard segment and the soft segment preferably account for total 100 mass% of the thermoplastic polyester elastomer A. This can sufficiently exhibit the aforementioned effects. The thermoplastic polyester elastomer A has the content of the hard segment of more preferably 30 to 63 mass%, and further preferably 40 to 60 mass%. The content of the soft segment is more preferably 37 to 70 mass%, and further preferably 40 to 60 mass%. This can furthermore exhibit the aforementioned effects.

The thermoplastic polyester elastomer A has better heat-aging resistance and acid resistance with a larger proportion of the hard segment. Meanwhile, the larger proportion of the hard segment means higher hardness, and thereby flexibility and low-temperature characteristics tend to be deteriorated. Thus, the thermoplastic polyester elastomer A preferably has the mass ratio between the hard segment and the soft segment within the above range.

### (Hard Segment)

The hard segment is composed of a polyester constituted from an aromatic dicarboxylic acid and an aliphatic or alicyclic diol as constituting components. As the aromatic dicarboxylic acid that constitutes the polyester of the hard segment, conventionally known aromatic dicarboxylic acids may be widely used, and not particularly limited. The aromatic dicarboxylic acid is preferably, for example, terephthalic acid or naphthalenedicarboxylic acid (among the isomers, 2,6-naphpthalenedicarboxylic acid is preferable). A content of these aromatic dicarboxylic acids is preferably 70 mol% or more, and more preferably 80 mol% or more in all dicarboxylic acids that constitute the polyester of the hard segment. As other dicarboxylic acids, aromatic dicarboxylic acids such as diphenyldicarboxylic acid, isophthalic acid, and sodium 5-sulfoisophthalate, alicyclic dicarboxylic acids such as cyclohexanedicarboxylic acid and tetrahydrophthalic anhydride, aliphatic dicarboxylic acids such as succinic acid, glutaric acid, adipic acid, azelaic acid, sebacic acid, dodecanedioic acid, dimer acid, and hydrogenated dimer acid, and the like may be contained. These dicarboxylic acids can be used within a range where the melting point of the thermoplastic polyester elastomer A is not significantly lowered, and specifically, the content is preferably 30 mol% or less, and more preferably 20 mol% or less in all the dicarboxylic acids.

As the aliphatic or alicyclic diol that constitutes the polyester of the hard segment, conventionally known aliphatic or alicyclic diols may be widely used, and not particularly limited. The aliphatic or alicyclic diol is preferably alkylene glycols that mainly have 2 to 8 carbon atoms. Specific examples thereof include ethylene glycol, 1,3-propylene glycol, 1,4-butanediol, 1,6-hexanediol, and 1,4-cyclohexanedimethanol. Among them, any one of 1,4-butanediol or 1,4-cyclohexanedimethanol is preferable.

As the component that constitutes the polyester of the hard segment, a component composed of a constituent unit derived from butylene terephthalate (constituent unit derived from terephthalic acid and 1,4-butanediol) or a constituent unit derived from butylene naphthalate (constituent unit derived from 2,6-naphthalenedicarboxylic acid and 1,4-butanediol) is preferable from the viewpoints of physical properties, moldability, and cost performance.

As for the thermoplastic polyester elastomer A, an aromatic polyester suitable for the polyester that constitutes the hard segment is manufactured in advance, and then copolymerized with the soft segment component described later. In this case, the aromatic polyester can be easily obtained according to a common method for manufacturing a polyester. The polyester that constitutes the hard segment preferably has a number average molecular weight of 10000 to 40000.

### (Soft Segment)

The soft segment contains the aliphatic polycarbonate as noted above. The aliphatic polycarbonate preferably has a constituent unit derived from an aliphatic diol that mainly has 2 to 12 carbon atoms. Examples of these aliphatic diols include ethylene glycol, 1,3-propylene glycol, 1,4-butanediol, 1,5-pentanediol, 1,6-hexanediol, 1,8-octanediol, 2,2-dimethyl-1,3-propanediol, 3-methyl-1,5-pentanediol, 2,4-diethyl-1,5-pentanediol, 1,9-nonanediol, and 2-methyl-1,8-octanediol. Particularly, the aliphatic polycarbonate preferably has a constituent unit derived from an aliphatic diol having 5 to 12 carbon atoms from the viewpoint of imparting flexibility and low-temperature characteristics to the thermoplastic polyester elastomer A. These components may be used singly, or may be used in combination of two or more thereof as necessary based on examples described below.

An aliphatic polycarbonate diol to be a raw material of the aliphatic polycarbonate preferably has a low melting point (for example, 70°C or less) and a low glass transition temperature. For example, an aliphatic polycarbonate diol having a constituent unit derived from 1,6-hexanediol is preferable because of a low glass transition temperature of approximately -60°C and a melting point of approximately 50°C, which yield good low-temperature characteristics. An aliphatic polycarbonate diol obtained by copolymerizing an appropriate amount of, for example, 3-methyl-1,5-pentanediol with the aliphatic polycarbonate diol is preferable because of a lowered melting point or an amorphous property, which yields good low-temperature characteristics, although the glass transition temperature becomes rather higher than the aliphatic polycarbonate diol before the copolymerization. Furthermore, for example, an aliphatic polycarbonate diol composed of 1,9-nonanediol and 2-methyl-1,8-octanediol is preferable because of a sufficiently low melting point of approximately 30°C and a glass transition temperature of approximately -70°C, which yield particularly good low-temperature characteristics.

The aliphatic polycarbonate should not be necessarily limited to be composed of only the polycarbonate component, and a small amount of other glycols, dicarboxylic acids, ester compounds, ether compounds, or the like may be copolymerized. Examples of such a copolymerization component include: glycols such as dimer diol, hydrogenated dimer diol, and a modified derivative thereof; dicarboxylic acids such as dimer acid and hydrogenated dimer acid; polyesters or oligoesters composed of an aliphatic, aromatic, or alicyclic dicarboxylic acid and a glycol; polyesters or oligoesters composed of ε-caprolactone and the like; polyalkylene glycols or oligoalkylene glycols such as polytetramethylene glycol and polyoxyethylene glycol. Meanwhile, the soft segment is also preferably composed of the aliphatic polycarbonate.

The copolymerization component may be contained at a degree where the effect of the aliphatic polycarbonate segment is substantially not counteracted. Specifically, the aliphatic polycarbonate may contain the copolymerization component at 40 parts by mass or less, preferably 30 parts by mass or less, and more preferably 20 parts by mass or less based on 100 parts by mass of the polycarbonate component. If the aliphatic polycarbonate contains the copolymerization component at more than 40 parts by mass based on 100 parts by mass of the polycarbonate component, heat-aging resistance and water resistance of the thermoplastic polyester elastomer resin composition may be deteriorated.

Here, the soft segment preferably has a number average molecular weight of 5000 or more and 80000 or less. That is, the thermoplastic polyester elastomer A is preferably manufactured by reacting the polyester that constitutes the hard segment and the aliphatic polycarbonate diol having a number average molecular weight of 5000 to 80000 in a melting state from the viewpoint of compatibility between the hard segment and the soft segment. A larger number average molecular weight of the aliphatic polycarbonate diol can improve retention of the block property and improve the block property. The number average molecular weight of the aliphatic polycarbonate diol is more preferably 7000 or more, and further preferably 10000 or more. Meanwhile, the number average molecular weight of the aliphatic polycarbonate diol is more preferably 70000 or less, and further preferably 60000 or less. An excessively larger number average molecular weight of the aliphatic polycarbonate diol deteriorates the compatibility to cause phase separation, which may adversely affect mechanical properties of the molded product such as strength and elongation.

A method for optimizing the number average molecular weight of the aliphatic polycarbonate diol is not limited. An aliphatic polycarbonate diol having the optimal number average molecular weight may be obtained, the aliphatic polycarbonate diol may be prepared so as to have the optimal number average molecular weight, or the number average molecular weight may be regulated to be desirable by increasing a molecular weight of a polycarbonate diol having a low molecular weight in advance using a chain extender such as diphenyl carbonate and diisocyanate.

For example, as the method for manufacturing the aliphatic polycarbonate diol, the aforementioned aliphatic diol and the following carbonate, specifically dimethyl carbonate, diethyl carbonate, dipropyl carbonate, diisopropyl carbonate, dibutyl carbonate, dimethyl carbonate, diphenyl carbonate, and the like may be reacted to obtain the aliphatic polycarbonate diol.

As another method for manufacturing the aliphatic polycarbonate diol, an aliphatic polycarbonate diol having a low molecular weight and dimethyl carbonate, diethyl carbonate, dipropyl carbonate, diisopropyl carbonate, dibutyl carbonate, dimethyl carbonate, diphenyl carbonate, or the like may be reacted to obtain the aliphatic polycarbonate diol.

Here, the thermoplastic polyester elastomer A is formed by bonding 20 mass% or more and 65 mass% or less of the hard segment and 35 mass% or more and 80 mass% or less of the soft segment, as noted above. The expression "formed by bonding" the hard segment and the soft segment herein does not mean that the hard segment and the soft segment are bonded by a chain extender such as an isocyanate compound, but means a state where the constituent units that constitute the hard segment and the soft segment are directly bonded with an ester bond or a carbonate bond. Such a state can be obtained by, for example, repeating an ester-exchange reaction and a depolymerization reaction between the polyester that constitutes the hard segment and the polycarbonate that constitutes the soft segment (hereinafter, such reactions are referred to as "blocking reaction"). That is, the blocking reaction between the polyester that constitutes the hard segment and the polycarbonate that constitutes the soft segment may proceed to obtain the thermoplastic polyester elastomer A in which the hard segment and the soft segment are directly bonded with an ester bond or a carbonate bond.

The blocking reaction is preferably performed within a temperature range of more than or equal to a melting point of the polyester that constitutes the hard segment and lower than or equal to the above melting point +30°C. An active catalyst concentration in the system is freely set according to the temperature at which the blocking reaction is performed. That is, since the ester-exchange reaction and depolymerization rapidly proceed at higher reaction temperature, a lower active catalyst concentration in the system is preferable. At a lower reaction temperature, the active catalyst concentration in the system is desirably high at a certain degree.

As the catalyst, conventionally known catalysts such as, for example: titanium compounds such as titanium tetrabutoxide and potassium oxalate titanate; and tin compounds such as dibutyltin oxide and monohydroxybutyltin oxide may be used singly, or in combination of two or more. The catalyst may be present in the polyester or the polycarbonate in advance. In this case, a new catalyst is not necessarily added. Furthermore, the catalyst in the polyester or the polycarbonate may be partially or substantially deactivated in advance by any method. For example, when titanium tetrabutoxide is used as the catalyst, the catalyst can be deactivated by adding, for example, a phosphorus compound such as phosphorous acid, phosphoric acid, triphenyl phosphate, tristriethylene glycol phosphate, orthophosphoric acid, diethyl carbethoxymethylphosphonate, triphenyl phosphite, trimethyl phosphate, and trimethyl phosphite. The additive is not limited to these compounds, and the catalyst may be deactivated by any methods.

The blocking reaction can be performed by appropriately deciding combination of the reaction temperature, the catalyst concentration, and a reaction time. That is, the reaction conditions may be decided each time depending on various factors such as types and amount ratio of the hard segment and the soft segment, a shape of a reactor, and stirring situation.

As for the reaction conditions, for example, a melting point of a chain-extended polymer obtained by the blocking reaction (the thermoplastic polyester elastomer A) and a melting point of the polyester used as the hard segment are compared and a difference between the melting points that falls in a range from 2 to 60°C can be defined as an optimum value. If the difference in the melting point is less than 2°C, both of the hard segment and the soft segment are not mixed and/or reacted, which may yield a polymer that exhibits deteriorated elastic performance. Meanwhile, if the difference in the melting point is more than 60°C, the ester-exchange reaction drastically proceeds to yield a polymer with a deteriorated blocking property, and such a polymer may have deteriorated crystallinity, elastic performance, and the like.

A remained catalyst in the melted mixture obtained by the blocking reaction is desirably deactivated as much as possible by any methods. If the catalyst remains in the melted mixture at more than necessary amount, the ester-exchange reaction further proceeds during compounding, molding, and the like, which may vary physical properties of the chain-extended polymer (thermoplastic polyester elastomer A) obtained by the blocking reaction.

The catalyst is deactivated by, for example, adding a phosphorus compound such as phosphorous acid, phosphoric acid, triphenyl phosphate, tristriethylene glycol phosphate, orthophosphoric acid, diethyl carbethoxymethylphosphonate, triphenyl phosphite, trimethyl phosphate, and trimethyl phosphite, as noted above. The deactivation method is not limited thereto.

The thermoplastic polyester elastomer A may contain both or either of a trifunctional or more polycarboxylic acid and a polyol only at a small amount. These trifunctional or more compounds may be used by replacing both or either of a part of the dicarboxylic acid component and a part of the diol component in the hard segment. Examples of the trifunctional or more polycarboxylic acid and polyol include trimeric anhydride, benzophenonetetracarboxylic acid, trimethylolpropane, and glycerol. Meanwhile, the hard segment and the soft segment preferably account for total 100 mass% of the thermoplastic polyester elastomer A as noted above.

Here, the thermoplastic polyester elastomer A preferably has a melting point of 150°C or more and 225°C or less. In this case, in an operation of repeating three times a cycle of raising a temperature from room temperature to 300°C at a temperature-raising rate of 20°C/min by using a differential scanning calorimeter, holding the temperature at 300°C for 3 minutes, and then lowering the temperature to room temperature at a temperature-lowering rate of 100°C/min, a difference in melting point (Tm1-Tm3) between a melting point (Tm1) of the thermoplastic polyester elastomer A measured at the time of the first temperature lowering and a melting point (Tm3) of the thermoplastic polyester elastomer A measured at the time of the third temperature lowering in the operation is preferably 0°C or more and 50°C or less. The thermoplastic polyester elastomer resin composition that contains the thermoplastic polyester elastomer A that has the aforementioned feature about the melting point can exhibit the effects of the present embodiment with a good yield.

The difference in the melting point (Tm1-Tm3) is more preferably 0 to 40°C, and further preferably 0 to 30°C. The difference in the melting point is an indicator to exhibit retention ability of the blocking property of the thermoplastic polyester elastomer A. The thermoplastic polyester elastomer A that has a smaller difference in the melting point can be evaluated to have more excellent retention ability of the blocking property. When the difference in the melting point of the thermoplastic polyester elastomer A is 0°C or more and 50°C or less, the molded product that has excellent uniformity of quality with the excellent retention ability of the blocking property can be obtained. If the difference in the melting point is more than 50°C, the retention ability of the blocking property is deteriorated to increase unevenness of the quality in molding processing, and thereby the uniformity of quality and a recycle property of the molded product may be deteriorated.

Furthermore, the melting point of the thermoplastic polyester elastomer A is more preferably 175 to 200°C. If the melting point is less than 150°C, the thermoplastic polyester elastomer A melts at high temperature, and thereby use under a high-temperature environment may be limited. If the melting point is more than 225°C, the temperature for molding processing becomes excessively high to be likely to cause decomposition of the soft segment in molding processing, which may cause difficulty in obtaining the desired heat-aging resistance.

The melting point (Tm) of the thermoplastic polyester elastomer A can be determined by the following method. Specifically, the thermoplastic polyester elastomer A dried under a reduced pressure at 50°C for 15 hours is measured by using a differential scanning calorimeter DSC-50 (manufactured by SHIMADZU CORPORATION) from room temperature at a temperature-raising rate of 20°C/min to determine a temperature of an endothermic peak with melting as the melting point (Tm) of the thermoplastic polyester elastomer A. A sample for measuring the melting point of the thermoplastic polyester elastomer A is prepared by weighing 10 mg thereof on a pan made of aluminum (manufactured by TA Instruments, product model: 900793.901), and forming a sealed state by using a lid made of aluminum (manufactured by TA Instruments, product model: 900794.901). The melting point is measured under an argon atmosphere.

Furthermore, the difference in the melting point (Tm1-Tm3) of the thermoplastic polyester elastomer A can be determined by the following method. First, 10 mg of the thermoplastic polyester elastomer A dried under a reduced pressure at 50°C for 15 hours is weighed on a pan made of aluminum (manufactured by TA Instruments, product model: 900793.901), and a sealed state is formed by using a lid made of aluminum (manufactured by TA Instruments, product model: 900794.901) to prepare a sample for measurement. Then, the pan made of aluminum with the sealed sample for measurement is temperature-raised from room temperature to 300°C at a temperature-raising rate of 20°C/min under a nitrogen atmosphere by using a differential scanning calorimeter DSC-50 (manufactured by SHIMADZU CORPORATION), and retained at 300°C for 3 minutes. Thereafter, the pan made of aluminum is immersed in liquid nitrogen and rapidly cooled to room temperature at a temperature-lowering rate of 100°C/min. The pan is subsequently left at room temperature for 30 minutes, and then temperature is raised again from room temperature to 300°C at a temperature-raising rate of 20°C/min by using the differential scanning calorimeter DSC-50 (manufactured by SHIMADZU CORPORATION).

This cycle is repeated three times, and each of a melting point (Tm1) of the sample for measurement (the thermoplastic polyester elastomer A) measured at the time of the first temperature lowering to room temperature and a melting point (Tm3) of the sample for measurement (the thermoplastic polyester elastomer A) measured at the time of the third temperature lowering to room temperature is measured to determine the difference in the melting point (Tm1-Tm3).

The thermoplastic polyester elastomer A can be manufactured by a known method. For example, the thermoplastic polyester elastomer A can be manufactured by selecting an appropriate method from methods such as: a method of performing an ester-exchange reaction of a lower alcohol diester of a dicarboxylic acid, an excess amount of a low-molecular-weight glycol, and the soft segment component in the presence of the catalyst to obtain a reaction product, and performing polycondensation of the reaction product; a method of performing an esterification reaction of a dicarboxylic acid, an excess amount of a glycol, and the soft segment component in the presence of the catalyst to obtain a reaction product, and performing polycondensation of the reaction product; and a method of preparing the polyester of the hard segment in advance, and adding the soft segment component into this polyester to provide randomness with an ester-exchange reaction.

### <Polycarbodiimide Compound B>

The conduit tube and thermoplastic polyester elastomer resin composition according to the present embodiment comprise the thermoplastic polyester elastomer A and the polycarbodiimide compound B, as noted above. The polycarbodiimide compound B is added for a purpose of containing a bond with a urethane group represented by the following chemical formula in the thermoplastic polyester elastomer resin composition. That is, the thermoplastic polyester elastomer resin composition preferably has a moiety bonded with a urethane group. This can improve heat resistance with flexibility. Specifically, the polycarbodiimide compound B can form the bond with a urethane group by reaction with the thermoplastic polyester elastomer A. The urethane group will be described later.

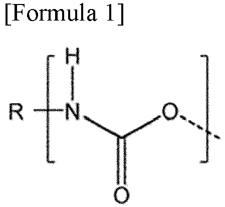

Specifically, the polycarbodiimide compound B may be a carbodiimidized compound of an isocyanate compound by a conventionally known method. Examples of the isocyanate compound include, but not limited to, 4,4'-diphenylmethane diisocyanate, toluene diisocyanate, xylene diisocyanate, xylylene diisocyanate, tetramethylxylene diisocyanate, hexamethylene diisocyanate, isophorone diisocyanate, naphthalene diisocyanate, 2,2,4-trimethylhexamethylene diisocyanate, 2,4,4-trimethylhexamethylene diisocyanate, dimer acid diisocyanate, dicyclohexylmethane diisocyanate, methylcyclohexane diisocyanate, and norbornene diisocyanate. These may be used singly, or used in combination of two or more. Examples of the isocyanate compound preferably include 4,4'-diphenylmethane diisocyanate, dicyclohexylmethane diisocyanate, hexamethylene diisocyanate, and isophorone diisocyanate.

Furthermore, the polycarbodiimide compound B can improve heat resistance and water resistance of the thermoplastic polyester elastomer resin composition, and can improve processability. The term "polycarbodiimide compound" herein means a carbodiimide compound that has two or more carbodiimide groups (structure of - N=C=N-) in one molecule. As long as it is such a polycarbodiimide compound, any of an aliphatic polycarbodiimide compound, an alicyclic polycarbodiimide compound, an aromatic polycarbodiimide compound, a copolymer thereof, and the like may be used. The polycarbodiimide compound B is preferably an aliphatic polycarbodiimide compound or an alicyclic polycarbodiimide compound. Meanwhile, if a monocarbodiimide is used instead of the polycarbodiimide compound B in the thermoplastic polyester elastomer resin composition, a reaction for blocking the terminal occurs and a chain length does not extend, which may adversely affect heat resistance and moldability.

Such a polycarbodiimide compound B can be obtained by, for example, a decarboxylation reaction of a diisocyanate compound. Examples of the diisocyanate compound include 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, 1,5-naphthylene diisocyanate, hexamethylene diisocyanate, dicyclohexylmethane diisocyanate, cyclohexane-1,4-diisocyanate, xylylene diisocyanate, isophorone diisocyanate, methylcyclohexane diisocyanate, tetramethylxylylene diisocyanate, and 1,3,5-triisopropylphenylene-2,4-diisocyanate. These may be used singly, or used in combination of two or more. Into the diisocyanate compound, a branched structure may be introduced, or a functional group other than the carbodiimide group and the isocyanate group may be introduced with copolymerization. The isocyanate group at the terminal of the diisocyanate compound may be reacted to control the polymerization degree, or a part of the terminal isocyanate groups may be blocked.

The polycarbodiimide compound B is particularly preferably an alicyclic polycarbodiimide derived from dicyclohexylmethane diisocyanate, cyclohexane-1,4-diisocyanate, isophorone diisocyanate, or the like. Among these, a polycarbodiimide derived from dicyclohexylmethane diisocyanate or isophorone diisocyanate is preferable.

The polycarbodiimide compound B preferably has 2 to 50 carbodiimide groups per molecule, and more preferably has 5 to 30 carbodiimide groups per molecule from the viewpoints of stability and operability. A number of carbodiimides in one molecule of the polycarbodiimide B (namely, a number of the carbodiimide groups) corresponds to the polymerization degree in a case of the polycarbodiimide obtained from the diisocyanate compound. For example, a polycarbodiimide compound obtained by bonding 21 diisocyanate compounds as a chain has a polymerization degree of 20, and thereby a number of carbodiimide groups in one molecule is 20. Since the polycarbodiimide compound is typically a mixture of molecules with various lengths, the number of carbodiimide groups is represented by an average value. When the polycarbodiimide compound B has a number of carbodiimide groups within the above range and is solid around room temperature, such a polycarbodiimide compound B can be formed as powder and thereby has excellent operability and compatibility in mixing with the thermoplastic polyester elastomer A, which is preferable from the viewpoints of uniform reactivity and bleeding-out resistance. The number of carbodiimide groups in one molecule of the polycarbodiimide compound B can be measured by a common method (a method of dissolution in an amine and back titration with hydrochloric acid).

### (Urethane Group)

The thermoplastic polyester elastomer resin composition may have the bond with a urethane group by the reaction between the polycarbodiimide compound B and the thermoplastic polyester elastomer A, as noted above. This can improve heat resistance with flexibility of the thermoplastic polyester elastomer resin composition. Although a detail mechanism is unclear, the reason why the thermoplastic polyester elastomer resin composition that has the bond with a urethane group has improved heat resistance is estimated as follows.

That is, it is known that the urethane group is decomposed at high temperature into a hydroxy group and a highly reactive isocyanate group. Therefore, the thermoplastic polyester elastomer resin composition in a long-term heat-aging resistance test causes decomposition of the urethane group and decomposition of the thermoplastic polyester elastomer A. However, the thermoplastic polyester elastomer resin composition in the long-term heat-aging resistance test also causes a recombination reaction (effect of repairing the molecular chain) between the hydroxy group and the highly reactive isocyanate group, which have been generated by decomposition of the thermoplastic polyester elastomer A. It is estimated that such an effect of repairing the molecular chain improves heat resistance of the thermoplastic polyester elastomer resin composition.

The thermoplastic polyester elastomer resin composition comprises 0.1 parts by mass or more and 5 parts by mass or less of the polycarbodiimide compound B based on 100 parts by mass of the thermoplastic polyester elastomer A. The content of the polycarbodiimide compound B is preferably 0.5 to 4 parts by mass, and more preferably 1 to 3 parts by mass based on 100 parts by mass of the thermoplastic polyester elastomer A. Particularly, the thermoplastic polyester elastomer resin composition may comprise more than 2 parts by mass and 5 parts by mass or less of the polycarbodiimide compound B, and further preferably 3 parts by mass or more and 5 parts by mass or less of the polycarbodiimide compound B based on 100 parts by mass of the thermoplastic polyester elastomer A. If the content of the polycarbodiimide compound B is less than 0.1 parts by mass, the effect of improving heat resistance becomes insufficient. If the content of the polycarbodiimide compound B is more than 5 parts by mass, the basicity becomes excessively high, which may promote decomposition of the thermoplastic polyester elastomer A or may cause contamination of a mold due to evaporation of the polycarbodiimide compound B.

### <Other Components>

With the conduit tube and thermoplastic polyester elastomer resin composition according to the present embodiment, various additives may be blended according to a purpose within a range where the effects of the present embodiment are not inhibited. Examples of the additive include a conventionally known hindered-phenol-type, sulfur-type, phosphorus-type, or amine-type oxidation inhibitor, a hindered-amine-type, triazole-type, benzophenone-type, benzoate-type, nickel-type, or salicylate-type light stabilizer, an antistatic, a lubricant, a molecule regulator such as a peroxide, a metal deactivator, organic and inorganic nucleating agents, a neutralizer, an antacid, an antibacterial agent, a fluorescent brightening agent, a filler, a flame retardant, a flame-retardant auxiliary, and organic and inorganic pigments.

Examples of the hindered-phenol-type oxidation inhibitor include 3,5-di-t-butyl-4-hydroxytoluene, n-octadecyl β-(4'-hydroxy-3',5'-di-t-butylphenyl)propionate, tetrakis[methylene-3-(3',5'-di-t-butyl-4'-hydroxyphenyl)propionate]methane, 1,3,5-trimethyl-2,4,6'-tris(3,5-di-t-butyl-4-hydroxybenzyl)benzene, calcium (3,5-di-t-butyl-4-hydroxybenzylmonoethylphosphate), triethylene glycol bis[3-(3-t-butyl-5-methyl-4-hydroxyphenyl)propionate], pentaerythrityl tetrakis[3-(3,5-di-t-butylanilino)-1,3,5-triazine], 3,9-bis[1,1-dimethyl-2-{β-(3-t-butyl-4-hydroxy-5-methylphenyl)propionyloxy}ethyl]-2,4,8, 10-tetraoxaspiro[5,5]undecane, bis[3,3-bis(4'-hydroxy-3'-t-butylphenyl)butyric acid] glycol ester, triphenol, 2,2'-ethylidene bis(4,6-di-t-butylphenol), N,N'-bis[3-(3,5-di-t-butyl-4-hydroxyphenyl)propionyl]hydrazine, 2,2'-oxamide bis[ethyl-3-(3,5-di-t-butyl-4-hyroxyphenyl)propionate], 1,1,3-tris(3',5'-dit-butyl-4'-hydroxybenzyl)-S-triazin-2,4,6(1H,3H,5H)-trione, 1,3,5-tris(4-t-butyl-3-hydroxy-2,6-dimethylbenzyl)isocyanurate, 3,5-di-t-butyl-4-hydroxyhydrocinnamic triester with 1,3,5-tris(2-hydroxyethyl)-S-triazine-2,4,6(1H,3H,5H), and N,N-hexamethylenebis(3,5-di-t-butyl-4-hydroxy-hydrocinnamide).

Examples of the sulfur-type oxidation inhibitor include dilauryl 3,3'-thiodipropionate ester, dimyristyl 3,3'-thiodipropionate ester, distearyl 3,3'-thiodipropionate ester, lauryl stearyl 3,3'-thiodipropionate ester, dilauryl thiodipropionate, dioctadecyl sulfide, and pentaerythritol tetra(β-lauryl thiopropionate) ester.

Examples of the phosphorus-type oxidation inhibitor include tris(mixed, mono- or di-nonylphenyl) phosphite, tris(2,3-di-t-butylphenyl) phosphite, 4,4'-butylidene bis(3-methyl-6-t-butylphenyl-di-tridecyl) phosphite, 1,1,3-tris(2-methyl-4-di-tridecylphosphite-5-t-butylphenyl)butane, tris(2,4-di-t-butylphenyl) phosphite, bis(2,4-di-t-butylphenyl)pentaerythritol di-phosphite, tetrakis(2,4-di-t-butylphenyl)-4,4'-biphenylene phosphite, bis(2,6-di-t-butyl-4-methylphenyl)pentaerythritol di-phosphite, tetrakis(2,4-di-t-butylphenyl)-4,4'-biphenylene diphosphonate, triphenyl phosphite, diphenyl decyl phosphite, tridecyl phosphite, trioctyl phosphite, tridodecyl phosphite, trioctadecyl phosphite, trinonylphenyl phosphite, and tridodecyl trithiophosphite.

Examples of the amine-type oxidation inhibitor include: amines such as N,N-diphenylethylenediamine, N,N-diphenylacetamidine, N,N-diphenylformamidine, N-phenylpiperidine, dibenzylethylenediamine, triethanolamine, phenothiazine, N,N'-di-sec-butyl-p-phenylenediamine, 4,4'-tetramethyl-diaminodiphenylmethane, N,N'-dioctyl-diphenylamine, N,N'-bis(1,4-dimethyl-pentyl)-p-phenylenediamine, phenyl-α-naphthylamine, phenyl-β-naphthylamine, and 4,4'-bis(4-α,α-dimethylbenzyl)diphenylamine; a derivative thereof; a reaction product of the amine and an aldehyde; and a reaction product of the amine and a ketone.

Examples of the hindered-amine-type light stabilizer include a polycondensation product with dimethyl succinate-1-(2-hydroxyethyl)-4-hydroxy-2,2,6,6-tetramethylpiperidine, poly[[6-(1,1,3,3-tetrabutyl)imino-1,3,5-triazin-2,4-diyl]hexamethylene [(2,2,6,6-tetramethyl-4-piperidyl)imyl]], 2-n-butylmalonic acid bis(1,2,2,6,6-pentamethyl-4-piperidyl) ester, tetrakis(2,2,6,6-tetramethyl-4-piperidyl) 1,2,3,4-butanetetracarboxylate, bis(2,2,6,6-tetramethyl-4-piperidyl) sebacate, a polycondensation product of N,N'-bis(2,2,6,6-tetramethyl-4-piperidyl)hexamethylenediamine and 1,2-dibromoethane, poly[(N,N'-bis(2,2,6,6-tetramethyl-4-piperidyl)hexamethylenediamine)-(4-morpholino-1,3,5-triazin-2,6-diyl)-bis(3,3,5,5-tetramethylpiperazine)], tris(2,2,6,6-tetramethyl-4-piperidyl)dodecyl 1,2,3,4-butanetetracarboxylate, tris(1,2,2,6,6-pentamethyl-4-piperidyl)dodecyl 1,2,3,4-butanetetracarboxylate, bis(1,2,2,6,6-pentamethyl-4-piperidyl) sebacate, 1,6,11-tris[{4,6-bis(N-butyl-N-(1,2,2,6,6-pentamethylpiperidin-4-yl)amino-1,3,5-triazin-2-yl)amino}undecane, 1-[2-(3,5-di-t-butyl-4-hydroxyphenyl)propionyloxy]-2,2,6,6-tetramethylpiperidine, 8-benzyl-7,7,9,9-tetramethyl-3-octyl-1,3,8-triazaspiro[4,5]undecan-2,4-dione, 4-benzoyloxy-2,2,6,6-tetramethylpiperidine, and a condensation product of N,N'-bis(3-aminopropyl)ethylenediamine-2,4-bis[N-butyl-N-(1,2,2,6,6-pentamethyl-4-piperidyl)amino]-6-chloro-1,3,5-triazine.

Examples of the benzophenone-type, benzotriazole-type, triazole-type, nickel-type, or salicylate-type light stabilizer include 2,2'-dihydroxy-4-methoxybenzophenone, 2-hydroxy-4-n-octoxybenzophenone, p-t-butylphenyl salicylate, 2,4-di-t-butylphenyl 3,5-di-t-butyl-4-hydroxybenzoate, 2-(2'-hydroxy-5'-methylphenyl)benzotriazole, 2-(2'-hydroxy-3',5'-di-t-amyl-phenyl)benzotriazole, 2-[2'-hydroxy-3',5'-bis(α,α-dimethylbenzylphenyl)benzotriazole, 2-(2'-hydroxy-3'-t-butyl-5'-methylphenyl)-5-chlorobenzotriazole, 2-(2'-hydroxy-3',5'-di-t-butylphenyl)-5-chlorobenzothiazole, 2,5-bis-[5'-t-butylbenzoxazolyl-(2)]-thiophene, bis(3,5-di-t-butyl-4-hydroxybenzylphosphate monoethyl ester) nickel salt, a mixture of 85 to 90% of 2-ethoxy-5-t-butyl-2'-ethyloxalic acid bisanilide and 10 to 15% of 2-ethoxy-5-t-butyl-2'-ethyl-4'-t-butyloxalic acid bisanilide, 2-[2-hydroxy-3,5-bis(α,α-dimethylbenzyl)phenyl]-2H-benzotriazole, 2-ethoxy-2'-ethyloxazalic acid bisanilide, 2-[2'-hydroxy-5'-methyl-3'-(3 ",4",5 ",6"-tetrahydrophthalimide-methyl)phenyl]benzotriazole, bis(5-benzoyl-4-hydroxy-2-methoxyphenyl)methane, 2-(2'-hydroxy-5'-t-octylphenyl)benzotriazole, 2-hydroxy-4-i-octoxybenzophenone, 2-hydroxy-4-dodecyloxybenzophenone, 2-hydroxy-4-octadecyloxybenzophenone, and phenyl salicylate.

Examples of the lubricant include: hydrocarbon-type, fatty-acid-type, fatty-acid-amide-type, ester-type, alcohol-type, metal-soap-type, natural-wax-type, silicone-type, and fluorine-type compounds. Specific examples thereof include: liquid paraffin, synthetic paraffin, synthetic hard paraffin, synthetic isoparaffin petroleum hydrocarbon, chlorinated paraffin, paraffin wax, micro-wax, low-polymerization polyethylene, and fluorocarbon oil; fatty acid compounds that have 12 or more carbon atoms, such as lauric acid, myristic acid, palmitic acid, stearic acid, arachidic acid, and behenic acid; saturated or unsaturated aliphatic amides that have 3 to 30 carbon atoms, such as hexylamide, octylamide, stearylamide, palmitylamide, oleylamide, erucylamide, ethylenebisstearylamide, laurylamide, behenylamide, methylenebisstearylamide, and ricinoleamide, and a derivative thereof; a lower alcohol ester of an fatty acid; a polyhydric alcohol ester of a fatty acid; a polyglycol ester of a fatty acid; butyl stearate, which is an aliphatic alcohol ester of a fatty acid; hardened castor oil; ethylene glycol monostearate and the like; cetyl alcohol; stearyl alcohol; ethylene glycol; polyethylene glycol that has a molecular weight of 200 to 10000; polyglycerol; carnauba wax; candelilla wax; montan wax; dimethylsilicone; silicone gum; and ethylene tetrafluoride. Examples of the lubricant also include a metal soap that is a metal salt composed of a compound that has a linear saturated fatty acid, a side chain acid, or cinnolic acid, wherein the metal is one or more selected from the group that consisting of Li, Mg, Ca, Sr, Ba, Zn, Cd, Al, Sn, and Pb.

Examples of the filler include: oxides such as magnesium oxide, aluminum oxide, silicon oxide, calcium oxide, titanium oxide (rutile type, anatase type), chromium oxide (trivalent), iron oxide, zinc oxide, silica, diatomaceous earth, alumina fiber, antimony oxide, barium ferrite, strontium ferrite, beryllium oxide, pumice, and pumice balloon; basic substances or hydroxides such as magnesium hydroxide, aluminum hydroxide, and basic magnesium carbonate; carbonate salts such as magnesium carbonate, calcium carbonate, barium carbonate, ammonium carbonate, calcium sulfite, dolomite, and dawsonite; sulfate (or sulfite) salts such as calcium sulfate, barium sulfate, ammonium sulfate, calcium sulfite, and basic magnesium sulfate; silicate salts such as sodium silicate, magnesium silicate, aluminum silicate, potassium silicate, calcium silicate, talc, clay, mica, asbestos, glass fiber, montmorillonite, glass balloon, glass beads, and bentonite; kaolin (ceramic clay), perlite, iron powder, copper powder, lead powder, aluminum powder, tungsten powder, molybdenum sulfide, carbon black, boron fiber, silicon carbide fiber, brass fiber, potassium titanate, lead zirconate titanate, zinc borate, aluminum borate, barium metaborate, calcium borate, and sodium borate.

Examples of the flame-retardant auxiliary include antimony trioxide, antimony tetroxide, antimony pentoxide, sodium pyroantimonate, tin dioxide, zinc metaborate, aluminum hydroxide, magnesium hydroxide, zirconium oxide, molybdenum oxide, a red phosphorus compound, ammonium polyphosphate salt, melamine cyanurate, and ethylene tetrafluoride.

Examples of the flame retardant include melamine, melamine cyanurate, melamine phosphate, and guanidine sulfamate.

Examples of the flame retardant include inorganic phosphorus compounds, red phosphorus compounds, inorganic phosphorus compounds, and organic phosphorus compounds. Examples of the inorganic phosphorus compound include ammonium polyphosphate salt. Examples of the red phosphorus compound include red phosphorus coated with a resin, and a composite compound with aluminum. Examples of the organic phosphorus compound include phosphate esters and melamine phosphate. Examples of the phosphate ester include phosphates, phosphonates, and phosphinates such as trimethyl phosphate, triethyl phosphate, tributyl phosphate, trioctyl phosphate, trioctyl phosphate, tributoxyethyl phosphate, octyl diphenyl phosphate, tricresyl phosphate, cresyl diphenyl phosphate, triphenyl phosphate, trixylenyl phosphate, tris-isopropylphenyl phosphate, diethyl-N,N-bis(2-hydroxyethyl)aminomethyl phosphonate, bis(1,3-phenylenediphenyl) phosphate, aromatic condensed phosphate ester 1,3-[bis(2,6-dimethylphenoxy)phosphenyloxy]benzene, and 1,4-[bis(2,6-dimethylphenoxy)phosphenyloxy]benzene. These phosphorus compounds are preferable from the viewpoints of hydrolysis resistance, heat stability, and flame-retardant properties.

As a method for blending the above additives with the thermoplastic polyester elastomer resin composition, a conventionally known blending method may be used. For example, a heating roller, an extruder, and a kneader such as a Banbury mixer may be used. Furthermore, for manufacturing the thermoplastic polyester elastomer A, the additives may be blended with the hard segment or the soft segment before the ester-exchange reaction or before the polycondensation reaction.

In the conduit tube and thermoplastic polyester elastomer resin composition according to the present embodiment, a total of the thermoplastic polyester elastomer A and the polycarbodiimide compound B preferably account for 80 mass% or more, more preferably account for 90 mass% or more, and further preferably account for 95 mass% or more.

The composition and composition ratio of the thermoplastic polyester elastomer resin composition can be calculated from, for example, a proton integration ratio of ¹H-NMR measured by dissolving a sample in a solvent such as deuterated chloroform.

### <Reactive Compound C>

The conduit tube and thermoplastic polyester elastomer resin composition according to the present embodiment may comprise a reactive compound C having two or more glycidyl groups in addition to the thermoplastic polyester elastomer A and the polycarbodiimide compound B as noted above. The reactive compound C has two or more glycidyl groups as noted above. The reactive compound C is a so-called polyfunctional epoxy compound, which has two or more glycidyl groups. The reactive compound C is added into the thermoplastic polyester elastomer resin composition for a purpose of improving processability in blow-molding or the like by exhibiting the effect of chain expansion of the thermoplastic polyester elastomer A.

Specific examples of the reactive compound C include: 1,6-dihydroxynaphthalene diglycidyl ether, 1,3-bis(oxiranylmethoxy)benzene, and the like, which have two glycidyl groups; 1,3,5-tris(2,3-epoxypropyl)-1,3,5-triazin-2,4,6-(1H,3H,5H)-trione, diglycerol triglycidyl ether, and the like, which have three glycidyl groups; and 1-chloro-2,3-epoxypropane formaldehyde 2,7-naphthalenediol polycondensation product, and pentaerythritol polyglycidyl ether, and the like, which have four glycidyl groups. Among them, the reactive compound C is preferably a polyfunctional glycidyl compound or a polyfunctional epoxy compound that has heatresistant skeleton. Particularly, the reactive compound C is preferably a bifunctional or tetrafunctional epoxy compound that has a naphthalene structure as a skeleton, or a trifunctional glycidyl compound that has a triazine structure as a skeleton. The reactive compound C is preferably a bifunctional or trifunctional glycidyl compound with considering an occurrence degree of gelation due to aggregation or solidification of the epoxy itself.

The thermoplastic polyester elastomer resin composition may comprise 0 parts by mass or more and 0.5 parts by mass or less of the reactive compound C based on 100 parts by mass of the thermoplastic polyester elastomer A. The content of the reactive compound C is preferably 0.1 to 0.5 parts by mass, and more preferably 0.2 to 0.5 parts by mass based on 100 parts by mass of the thermoplastic polyester elastomer A. If the content of the reactive compound C is more than 0.5 parts by mass, a thickening effect becomes excessive to tend to adversely affect moldability or mechanical properties of the molded product. Furthermore, the reactive compound C may be aggregated or cured to cause roughness on a surface of the molded product.

### [Method for Manufacturing Thermoplastic Polyester Elastomer Resin Composition]

Specific examples of a method for manufacturing the thermoplastic polyester elastomer resin composition according to the present embodiment and the thermoplastic polyester elastomer resin composition contained in the conduit tube include the following manufacturing methods. A first example is a two-step kneading method of: melt-kneading the thermoplastic polyester elastomer A and a stabilizer; and then melt-kneading the polycarbodiimide compound B. A second example is a method of: melt-kneading the thermoplastic polyester elastomer A and the reactive compound C in advance by using an extruder with a vent hole; and with the melt-kneading, feeding the polycarbodiimide compound B through the vent hole of the extruder to be melt-kneaded. Examples of the manufacturing method also include a method of: mixing the thermoplastic polyester elastomer A and the reactive compound C with a mixer such as a blender and a super mixier; then obtaining a melt-kneaded product with a conventionally known mixer represented by a monoaxial or biaxial screw-type melt-kneader and a kneader-type heater; and melt-kneading and reacting this melt-kneaded product with the polycarbodiimide compound B.

### [Method for Manufacturing Conduit Tube]

As a specific method for manufacturing the conduit tube according to the present embodiment, conventionally known manufacturing methods may be used as long as the method can form a molded product that has a hollow shape from the aforementioned thermoplastic polyester elastomer resin composition. Specifically, blow-molding can manufacture the conduit tube that has a hollow shape suitable for the use. Various molding methods may be applied as the blow-molding, and examples thereof include direct blow-molding, injection blow-molding, 3D blow-molding, sheet blow-molding, and free blow-molding.

### EXAMPLE

Hereinafter, the present invention will be described in more detail with Examples, but the present invention is not limited at all by these Examples. Measured values described in Examples were measured by the following measurement methods.

### <Presence or Absence of Bond with Urethane Group (Urethane Bond)>

A thermoplastic polyester elastomer resin composition of each of Examples and Comparative Examples was dried under a reduced pressure at 50°C for 15 hours, and subjected to microscopic infrared spectrometry by using a Fourier transformation infrared spectrometer (trade name: "FTS-7000e", manufactured by Agilent Technologies Japan, Ltd.) to obtain a predetermined spectrum. In the spectrum, an intensity ratio (spectrum intensity ratio) between a spectrum at 1530 cm⁻¹ attributed to a urethane group and a spectrum at 1505 cm⁻¹ attributed to an aromatic ring was determined, and presence or absence of the urethane bond was judged from the intensity ratio according to the following criteria.
The spectrum intensity ratio of 0.022 or more: The urethane bond is present.
The spectrum intensity ratio of less than 0.022: The urethane bond is absent.

### <Hardness (Surface Hardness, Shore D)>

In accordance with a test method described in ASTM D 2240 (Shore D), surface hardness of the thermoplastic polyester elastomer resin composition of each of Examples and Comparative Examples under an environment at 23°C was measured as follows.

First, the thermoplastic polyester elastomer resin composition was injected from an injection molding apparatus at a cylinder temperature +20°C of a melting point of the resin composition and at a mold temperature of 50°C to obtain an injection-molded product with 100 mm in length × 100 mm in width × 2.0 mm in thickness. Then, onto three of the injection-molded products stacked in the thickness direction, a predetermined needle tip was dropped under an environment at 23°C to read an instant value of Shore D at this time. This instant value of Shore D was specified as the hardness (surface hardness) of the resin composition.

### <Melting Point (Tm) and Difference in Melting Point (Tm1-Tm3)>

The melting point (Tm) of the thermoplastic polyester elastomer A in each of Examples and Comparative Examples was determined by the following method. Specifically, the thermoplastic polyester elastomer A dried under a reduced pressure at 50°C for 15 hours was measured by using a differential scanning calorimeter DSC-50 (manufactured by SHIMADZU CORPORATION) from room temperature at a temperature-raising rate of 20°C/min to determine a temperature of an endothermic peak with melting as the melting point (Tm) of the thermoplastic polyester elastomer A. A sample for measuring the melting point of the thermoplastic polyester elastomer A was prepared by weighing 10 mg thereof on a pan made of aluminum (manufactured by TA Instruments, product model: 900793.901), and forming a sealed state by using a lid made of aluminum (manufactured by TA Instruments, product model: 900794.901). The melting point was measured under an argon atmosphere.

Furthermore, the difference in the melting point (Tm1-Tm3) of the thermoplastic polyester elastomer A was determined by the following method. First, 10 mg of the thermoplastic polyester elastomer A dried at 50°C under a reduced pressure for 15 hours was weighed on a pan made of aluminum (manufactured by TA Instruments, product model: 900793.901), and a sealed state was formed by using a lid made of aluminum (manufactured by TA Instruments, product model: 900794.901) to prepare a sample for measurement. Then, the pan made of aluminum with the sealed sample for measurement was temperature-raised from room temperature to 300°C at a temperature-raising rate of 20°C/min under a nitrogen atmosphere by using a differential scanning calorimeter DSC-50 (manufactured by SHIMADZU CORPORATION), and retained at 300°C for 3 minutes. Thereafter, the pan made of aluminum was immersed in liquid nitrogen and rapidly cooled to room temperature at a temperature-lowering rate of 100°C/min. The pan was subsequently left at room temperature for 30 minutes, and then temperature-raised again from room temperature to 300°C at a temperature-raising rate of 20°C/min by using the differential scanning calorimeter DSC-50 (manufactured by SHIMADZU CORPORATION). This cycle was repeated three times, and the difference in the melting point (Tm1-Tm3) was determined from a melting point (Tm1) measured at the time of the first temperature lowering to room temperature and a melting point (Tm3) measured at the time of the third temperature lowering to room temperature.

### <Test for Heat-Aging Resistance>

To evaluate heat-aging resistance of the thermoplastic polyester elastomer resin composition of each of Examples and Comparative Examples, the following test was performed.

### (Production of Specimen)

First, the thermoplastic polyester elastomer resin composition was injected from an injection molding apparatus at a cylinder temperature of +20°C of a melting point of the resin composition and at a mold temperature of 30°C to obtain an injection-molded product with 100 mm in length × 100 mm in width × 2.0 mm in thickness. Then, this injection-molded product was punched into a JIS-3 dumbbell shape along the flowing direction to produce a specimen.

### (Measurement of Tensile Breakage Elongation Retention after Thermal Treatment)

The specimen was treated at 150°C for 1000 hours in a gear-type hot-air dryer. Another specimen of the above was treated at 170°C for 1000 hours in a gear-type hot-air dryer. Thereafter, absolute tensile elongation (tensile breakage elongation retention, unit: %) of each specimen was measured in accordance with JIS K 6251:2010.

### <Test for Water-Aging Resistance>

To evaluate water-aging resistance of the thermoplastic polyester elastomer resin composition of each of Examples and Comparative Examples, the following test was performed.

### (Production of Specimen)

A specimen of the thermoplastic polyester elastomer composition (JIS-3 dumbbell shape) was produced in the same manner as in the test for heat-aging resistance.

### (Measurement of Tensile Breakage Elongation Retention after Boiling-Water Treatment)

The specimen was treated at 100°C for 1000 hours in a container for water resistance test. Thereafter, absolute tensile elongation (tensile breakage elongation retention, unit: %) of each specimen was measured in accordance with JIS K 6251:2010.

### <Moldability Test: Drawdown of Parison in Blow-Molding>

By using an accumulator-type direct blow-molding apparatus (manufactured by The Japan Steel Works, Ltd., product model: JB102, 40 mmφ blow-molding apparatus), an extruding-molded product (so-called parison) in a conduit tube shape (pipe shape) was extruded at a molding temperature of 230°C, and drawdown of the parison was judged with the following criteria to evaluate the moldability.
A: The drawdown is extremely small, and the conduit tube shape is retained.
B: The drawdown is small, and the conduit tube shape can be molded.
C: The drawdown is considerably large, and the shape is collapsed to fail to perform the blowing.

### <Pressure Resistance Test>

A cylinder temperature of another direct blow-molding apparatus (monoaxial extruder: L/D=25, full-flight screw, screw diameter: 65 mm) was set to a measurement temperature of a melting viscosity, and a bottle was manufactured with direct blow-molding. Specifically, a die lip for forming a parison was attached to a tip of the cylinder, and blow-air was sealed inside the mold to mold the bottle as the conduit tube with approximately 3 mm in thickness. This molded product was set to a turboairduct resistance tester, and a pressure resistance test was performed under conditions of a set temperature: 190°C inside duct / 120°C outside duct, pressure: 230 kDa, and frequency: 0.5 Hz to evaluate a state of the bottle (evaluate pressure resistance) after one million times (approximately 556 hours).
A: Almost no deformation, and no rupture
B: A little deformation, but no rupture
C: Ruptured

In Examples and Comparative Examples, the following raw materials were used.

### <Aliphatic Polycarbonate Diol>

Each of 100 parts by mass of an aliphatic polycarbonate diol (trade name: "Carbonate Diol UH-CARB 200", molecular weight: 2000, 1,6-hexanediol type, manufactured by UBE Corporation) and 8.6 parts by mass of diphenyl carbonate was fed into a reaction vessel, and reacted at a temperature of 205°C at 130 Pa. After 2 hours, a content in the reaction vessel was cooled to obtain an aliphatic polycarbonate diol (number average molecular weight: 10000).

### <Thermoplastic Polyester Elastomer A>

The following compounds were prepared as a thermoplastic polyester elastomer A.

### (Thermoplastic Polyester Elastomer A-1)

Into a reaction vessel, 100 parts by mass of polybutylene terephthalate (PBT) that had a number average molecular weight of 30000 and 67 parts by mass of the above aliphatic polycarbonate diol (PCD) were fed, the mixture was stirred for 1 hour under conditions of 230°C to 245°C and 130 Pa to be clear, and then the content was taken out and cooled to manufacture a thermoplastic polyester elastomer A-1.

### (Thermoplastic Polyester Elastomer A-2)

Into a reaction vessel, 100 parts by mass of polybutylene terephthalate (PBT) that had a number average molecular weight of 30000 and 150 parts by mass of the above aliphatic polycarbonate diol (PCD) were fed, the mixture was stirred for 1 hour under conditions of 230°C to 245°C and 130 Pa to be clear, and then the content was taken out and cooled to manufacture a thermoplastic polyester elastomer A-2.

### (Thermoplastic Polyester Elastomer A-3)

Into a reaction vessel, 100 parts by mass of polybutylene terephthalate (PBT) that had a number average molecular weight of 30000 and 43 parts by mass of the above aliphatic polycarbonate diol (PCD) were fed, the mixture was stirred for 1 hour under conditions of 230°C to 245°C and 130 Pa to be clear, and then the content was taken out and cooled to manufacture a thermoplastic polyester elastomer A-3.

### (Thermoplastic Polyester Elastomer A-4)

Into a reaction vessel, 100 parts by mass of polybutylene terephthalate (PBT) that had a number average molecular weight of 30000 and 567 parts by mass of the above aliphatic polycarbonate diol (PCD) were fed, the mixture was stirred for 1 hour under conditions of 230°C to 245°C and 130 Pa to be clear, and then the content was taken out and cooled to manufacture a thermoplastic polyester elastomer A-4.

### <Polycarbodiimide Compound B>

The following compounds were prepared as a polycarbodiimide compound B.
(B-1) Alicyclic polycarbodiimide compound (trade name "CARBODILITE HMV-15CA", manufactured by Nisshinbo Chemical Inc.)
(B-2) Alicyclic polycarbodiimide compound (trade name "Stabaxol P", manufactured by Rhein Chemie)

The following compound was prepared as a monocarbodiimide compound that was a comparative target.

### (B-3) Monocarbodiimide compound (trade name "Stabaxol I-LF", manufactured by Rhein Chemie)

### <Reactive Compound C>

The following compound was prepared as a reactive compound C.

### (C) Triazine-skeleton-containing trifunctional epoxy compound (trade name: "TEPIC-S", manufactured by Nissan Chemical Corporation)

### <Production of Thermoplastic Polyester Elastomer Resin Compositions of Examples 1 to 8 and Comparative Examples 1 to 7>

### (Example 1)

Into a drum tumbler, 100 parts by mass of the thermoplastic polyester elastomer A-1 and 3.0 parts by mass of the polycarbodiimide compound B-1 were added, and mixed at room temperature for 30 minutes to obtain a mixture. Then, the mixture was melt-kneaded and extruded at 230°C by using a biaxial same-direction extruder with a vent hole (35 mmφ, L/D=48) to obtain a strand, and this strand was cut with water-cooling to obtain chips. Then, the chips were dried under a reduced pressure at 100°C to obtain a thermoplastic polyester elastomer resin composition.

### (Example 2)

A thermoplastic polyester elastomer resin composition of Example 2 was obtained in the same manner as in Example 1 except that the thermoplastic polyester elastomer A-2 was used instead of the thermoplastic polyester elastomer A-1.

### (Example 3)

A thermoplastic polyester elastomer resin composition of Example 3 was obtained in the same manner as in Example 1 except that the polycarbodiimide compound B-2 was used instead of the polycarbodiimide compound B-1.

### (Example 4)

A thermoplastic polyester elastomer resin composition of Example 4 was obtained in the same manner as in Example 2 except that the polycarbodiimide compound B-2 was used instead of the polycarbodiimide compound B-1.

### (Example 5)

Into a drum tumbler, 100 parts by mass of the thermoplastic polyester elastomer A-1 and 0.44 parts by mass of the reactive compound C were added, and mixed at room temperature for 30 minutes to obtain a mixture. Then, the mixture was melt-kneaded and extruded at 230°C by using a biaxial same-direction extruder with a vent hole (35 mmφ, L/D=48) to obtain a strand, and this strand was cut with water-cooling to obtain first chips. Then, the first chips were dried under a reduced pressure at 100°C, and then 100 parts by mass of the first chips and 3.0 parts by mass of the polycarbodiimide compound B-1 were melt-kneaded and extruded at 230°C by using the above biaxial same-direction extruder with a vent hole (35 mmφ, L/D=48) to obtain a strand, and this strand was cut with water-cooling to obtain second chips. Finally, the second chips were dried under a reduced pressure at 100°C to obtain a thermoplastic polyester elastomer resin composition.

### (Example 6)

A thermoplastic polyester elastomer resin composition of Example 6 was obtained in the same manner as in Example 5 except that the thermoplastic polyester elastomer A-2 was used instead of the thermoplastic polyester elastomer A-1.

### (Example 7)

A thermoplastic polyester elastomer resin composition of Example 7 was obtained in the same manner as in Example 5 except that the polycarbodiimide compound B-2 was used instead of the polycarbodiimide compound B-1.

### (Example 8)

A thermoplastic polyester elastomer resin composition of Example 8 was obtained in the same manner as in Example 6 except that the polycarbodiimide compound B-2 was used instead of the polycarbodiimide compound B-1.

### (Comparative Example 1)

Into a drum tumbler, 100 parts by mass of the thermoplastic polyester elastomer A-1 and 6.0 parts by mass of the polycarbodiimide compound B-1 were added, and mixed at room temperature for 30 minutes to obtain a mixture. Then, the mixture was melt-kneaded and extruded at 230°C by using a biaxial same-direction extruder with a vent hole (35 mmφ, L/D=48) to obtain a strand, and this strand was cut with water-cooling to obtain chips. Then, the chips were dried under a reduced pressure at 100°C to obtain a thermoplastic polyester elastomer resin composition.

### (Comparative Example 2)

A thermoplastic polyester elastomer resin composition of Comparative Example 2 was obtained in the same manner as in Comparative Example 1 except that the content of the polycarbodiimide compound B-1 was changed to an amount shown in Table 2.

### (Comparative Example 3)

A thermoplastic polyester elastomer resin composition of Comparative Example 3 was obtained in the same manner as in Example 1 except that the polycarbodiimide compound B-1 was changed to the reactive compound C, and a content thereof was changed to an amount shown in Table 2.

### (Comparative Example 4)

A thermoplastic polyester elastomer resin composition of Comparative Example 4 was obtained in the same manner as in Example 5 except that the thermoplastic polyester elastomer A-3 was used instead of the thermoplastic polyester elastomer A-1.

### (Comparative Example 5)

A thermoplastic polyester elastomer resin composition of Comparative Example 5 was obtained in the same manner as in Example 5 except that the thermoplastic polyester elastomer A-4 was used instead of the thermoplastic polyester elastomer A-1.

### (Comparative Example 6)

A thermoplastic polyester elastomer resin composition of Comparative Example 6 was obtained in the same manner as in Example 5 except that the monocarbodiimide compound B-3 was used instead of the polycarbodiimide compound B-1.

### (Comparative Example 7)

A thermoplastic polyester elastomer resin composition of Comparative Example 7 was obtained in the same manner as in Example 6 except that the monocarbodiimide compound B-3 was used instead of the polycarbodiimide compound B-1.

The aforementioned evaluations were performed on the thermoplastic polyester elastomer resin compositions of Examples 1 to 8 and Comparative Examples 1 to 7. Tables 1 and 2 show the results.

### [Table 1]

**Table. 1**

| | | | Example 1 | Example 2 | Example 3 | Example 4 | Example 5 | Example 6 | Example 7 | Example 8 |
|---|---|---|---|---|---|---|---|---|---|---|
| Thermoplastic polyester elastomer A | A-1 | parts by mass | 100 | - | 100 | - | 100 | - | 100 | - |
| | A-2 | parts by mass | - | 100 | - | 100 | - | 100 | - | 100 |
| | A-3 | parts by mass | - | - | - | - | - | - | - | - |
| | A-4 | parts by mass | - | - | - | - | - | - | - | - |
| Polycarbodiimide compound B | B-1 | parts by mass | 3 | 3 | - | - | 3 | 3 | - | - |
| | B-2 | parts by mass | - | - | 3 | 3 | - | - | 3 | 3 |
| | B-3 | parts by mass | - | - | - | - | - | - | - | - |
| Reactive compound C | C | parts by mass | - | - | - | - | 0.44 | 0.44 | 0.44 | 0.44 |
| Urethane group | | | present | present | present | present | present | present | present | present |
| Surface hardness (Shore D) | | | 53 | 39 | 53 | 39 | 53 | 39 | 53 | 39 |
| Melting point (°C) | | | 202 | 192 | 202 | 192 | 202 | 192 | 202 | 192 |
| Tm3-Tm1 (°C) | | | 18 | 11 | 18 | 11 | 15 | 12 | 16 | 13 |
| Heat-aging resistance (150°C, 1000 hr, %) | | | 99 | 100 | 97 | 99 | 94 | 95 | 93 | 94 |
| Heat-aging resistance (170°C, 1000 hr, %) | | | 85 | 87 | 84 | 86 | 87 | 85 | 83 | 80 |
| Water resistance (100°C, 1000 hr, %) | | | 98 | 100 | 94 | 98 | 96 | 98 | 92 | 96 |
| Pressure resistance | | | B | B | B | B | B | B | B | B |
| Moldability | | | B | B | B | B | A | A | A | A |
| Note | | | - | - | - | - | - | - | - | - |

### [Table 2]

**Table. 2**

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Thermoplastic polyester elastomer A | A-1 | parts by mass | 100 | 100 | 100 | - | - | 100 | - |
| | A-2 | parts by mass | - | | - | - | - | - | 100 |
| | A-3 | parts by mass | - | - | - | 100 | - | - | - |
| | A-4 | parts by mass | - | - | - | - | 100 | - | - |
| Polycarbodiimide compound B | B-1 | parts by mass | 6 | 0.05 | - | 3 | 3 | - | - |
| | B-2 | parts by mass | - | - | - | - | - | - | - |
| | B-3 | parts by mass | - | - | - | - | - | 3 | 3 |
| Reactive compound C | C | parts by mass | - | - | 0.6 | 0.44 | 0.44 | 0.44 | 0.44 |
| Urethane group | | | present | absent | absent | present | present | present | present |
| Surface hardness (Shore D) | | | 53 | 53 | 53 | 60 | 19 | 53 | 39 |
| Melting point (°C) | | | 202 | 202 | 202 | 207 | 142 | 202 | 192 |
| Tm3-Tm1 (°C) | | | 15 | 13 | 15 | 20 | 45 | 17 | 15 |
| Heat-aging resistance (150°C, 1000 hr, %) | | | 72 | 66 | 55 | 84 | 13 | 70 | 68 |
| Heat-aging resistance (170°C, 1000 hr, %) | | | 12 | 12 | 10 | 55 | 10 | 21 | 27 |
| Water resistance (100°C, 1000 hr, %) | | | 54 | 22 | 23 | 30 | 91 | 97 | 98 |
| Pressure resistance | | | B | B | B | A | C | B | B |
| Moldability | | | C | C | C | A | C | C | C |
| Note | | | Mold contaminated | - | - | - | - | - | - |

### <Consideration>

According to Tables 1 and 2, it is understood that the thermoplastic polyester elastomer resin compositions of Examples 1 to 8 have excellent flexibility, water resistance, and heat-aging resistance, and moldability and pressure resistance of the conduit tubes compared with those of Comparative Examples 1 to 7. Meanwhile, Comparative Example 1 had the excessive amount of the added polycarbodiimide compound B, and thereby exhibited poor heat-aging resistance, water resistance, and moldability. Comparative Example 2 had the small amount of the added polycarbodiimide compound B and insufficiently formed urethane bond, and thereby exhibited poor heat resistance, water resistance, and moldability. Comparative Example 3 had no polycarbodiimide compound B and had the excessive amount of the added reactive compound C, and thereby exhibited poor heat-aging resistance, water resistance, and moldability due to generation of a gelled product, crosslinking, and the like. Comparative Example 4 had the small content of the soft segment in the thermoplastic polyester elastomer A-3, and thereby exhibited poor flexibility and poor water resistance. Comparative Example 5 had the excessive content of the soft segment in the thermoplastic polyester elastomer A-4, and thereby exhibited low melting point and considerably poor heat resistance, pressure resistance, and moldability. In Comparative Examples 6 and 7, a reaction so as to block only the resin terminal occurred due to the monocarbodiimide compound, and thereby the chain length did not extend to exhibit poor heat-aging resistance and moldability.

From the above, the thermoplastic polyester elastomer resin composition according to the present embodiment and the conduit tube manufactured from the same have the features of excellent moldability, flexibility, water resistance, and heat-aging resistance. Therefore, the conduit tube can be applied for a complex shape with its excellent flexibility, and thereby exhibits excellent conduit tube performance. Furthermore, the thermoplastic polyester elastomer resin composition is useful for use of blow-molding products with excellent durability under a high-temperature environment that requires flexibility, such as a constant velocity joint boot, a suspension boot, a rack-and-pinion boot, and an airduct of automobiles.

The embodiments and Examples of the present invention have been described as above, but it is anticipated in advance that the constitution of each of the aforementioned embodiments and Examples are appropriately combined.

The embodiments and Examples disclosed herein are examples in all points, and should be considered not to be limitative. The scope of the present invention is denoted by not the aforementioned description but the claims, and intended to include means equivalent to the claims and all modification within the scope.

## Claims

1. A conduit tube, comprising a thermoplastic polyester elastomer resin composition comprising a thermoplastic polyester elastomer A and a polycarbodiimide compound B, wherein
the thermoplastic polyester elastomer A is formed by bonding 20 mass% or more and 65 mass% or less of a hard segment and 35 mass% or more and 80 mass% or less of a soft segment,
the hard segment is composed of a polyester constituted from an aromatic dicarboxylic acid and an aliphatic or alicyclic diol as constituting components,
the soft segment contains an aliphatic polycarbonate, and
the thermoplastic polyester elastomer resin composition contains 0.1 parts by mass or more and 5 parts by mass or less of the polycarbodiimide compound B based on 100 parts by mass of the thermoplastic polyester elastomer A.

2. The conduit tube according to claim 1, wherein the thermoplastic polyester elastomer resin composition contains a moiety bonded with a urethane group.

3. The conduit tube according to claim 1 or 2, wherein the hard segment and the soft segment account for total 100 mass% of the thermoplastic polyester elastomer A.

4. The conduit tube according to any one of claims 1 to 3, wherein the soft segment has a number average molecular weight of 5000 or more and 80000 or less.

5. The conduit tube according to any one of claims 1 to 4, wherein a hardness of the thermoplastic polyester elastomer resin composition measured in accordance with a test method for a hardness of thermoplastics prescribed in ASTM D 2240 is D20 or more and D59 or less.

6. The conduit tube according to any one of claims 1 to 5, wherein
the thermoplastic polyester elastomer A has a melting point of 150°C or more and 225°C or less, and
in an operation of repeating three times a cycle of raising a temperature from room temperature to 300°C at a temperature-raising rate of 20°C/min by using a differential scanning calorimeter, holding the temperature at 300°C for 3 minutes, and then lowering the temperature to room temperature at a temperature-lowering rate of 100°C/min, a difference in melting point (Tm1-Tm3) between a melting point (Tm1) of the thermoplastic polyester elastomer A measured at the time of the first temperature lowering and a melting point (Tm3) of the thermoplastic polyester elastomer A measured at the time of the third temperature lowering in the operation is 0°C or more and 50°C or less.

7. The conduit tube according to any one of claims 1 to 6, wherein a molded product obtained from the thermoplastic polyester elastomer resin composition has a tensile breakage elongation retention after a thermal treatment at 150°C for 1000 hours in a tensile test performed in accordance with JIS K6251:2010 of 80% or more, and a tensile breakage elongation retention after a thermal treatment at 170°C for 1000 hours in the tensile test of 50% or more.

8. The conduit tube according to any one of claims 1 to 7, wherein a molded product obtained from the thermoplastic polyester elastomer resin composition has a tensile breakage elongation retention after a boiling-water treatment at 100°C for 1000 hours in a tensile test performed in accordance with JIS K6251:2010 of 80% or more.

9. The conduit tube according to any one of claims 1 to 8, wherein the thermoplastic polyester elastomer resin composition comprises 0 parts by mass or more and 0.5 parts by mass or less of a reactive compound C having two or more glycidyl groups based on 100 parts by mass of the thermoplastic polyester elastomer A.

10. A thermoplastic polyester elastomer resin composition, comprising: a thermoplastic polyester elastomer A; and a polycarbodiimide compound B, wherein
the thermoplastic polyester elastomer A is formed by bonding 20 mass% or more and 65 mass% or less of a hard segment and 35 mass% or more and 80 mass% or less of a soft segment,
the hard segment is composed of a polyester constituted from an aromatic dicarboxylic acid and an aliphatic or alicyclic diol as constituting components,
the soft segment contains an aliphatic polycarbonate, and
the thermoplastic polyester elastomer resin composition contains more than 2 parts by mass and 5 parts by mass or less of the polycarbodiimide compound B based on 100 parts by mass of the thermoplastic polyester elastomer A.
